# DEMANDE DE BREVET EUROPEEN

(11) **EP 2 650 992 A2**
(43) Date de publication de la demande: **16.10.2013**
(21) Numéro de dépôt: 13160632.9
(22) Date de dépôt: 22.03.2013
(51) Int. Cl.: H02G 3/08, H02G 3/12, H02G 3/14

(54) **Chaussette d'étancheité pour appareillage électrique encastrable**

(30) Priorité: 12.04.2012 FR 1253350
(71) Demandeur: Legrand France, 87000 Limoges (FR); Legrand SNC, 87000 Limoges (FR)
(72) Inventeur: Caille, Jean-Loup, 87510 Peyrilhac (FR); Lochet, Anthony, 72170 Beaumont sur Sarthe (FR); Vecseri, Akos, 6800 Hódmezövásárhely (HU)
(74) Mandataire: Novagraaf Technologies

(57) **Abrégé**

Abrégé : L'invention se rapporte à une chaussette d'étanchéité pour appareillage électrique encastrable comprenant :
- une enveloppe (2) en matière flexible adaptée pour contenir un bloc fonctionnel d'un appareillage électrique encastrable ; et
- au moins une zone d'ouverture (3) pour recevoir un moyen de retenue du bloc fonctionnel.

## Description

### DOMAINE TECHNIQUE DE L'INVENTION

L'invention concerne une chaussette d'étanchéité pour appareillage électrique encastrable et également un appareillage électrique encastrable dans une boite d'encastrement.

### ETAT DE LA TECHNIQUE ANTERIEURE

L'utilisation de chaussette d'étanchéité pour appareillage électrique encastrable est connu et courant.

Une chaussette de ce type est décrite dans la demande de brevet français FR2959882.

Une chaussette du même type est également décrite dans la demande allemande de brevet DE 10 2008 015 128.

Une chaussette d'étanchéité pour dispositif électrique encastrable permet de conférer au dispositif électrique encastrable une étanchéité au moins à la poussière. Une étanchéité à l'air et à l'eau est aussi recherchée afin de réaliser, par exemple, des économies d'énergie en évitant les déperditions.

### EXPOSE DE L'INVENTION

Il serait donc avantageux d'obtenir une chaussette d'étanchéité pour appareillage électrique encastrable permettant d'assurer une étanchéité optimale à l'eau, l'air et la poussière.

Pour résoudre un ou plusieurs des inconvénients cités précédemment, une chaussette d'étanchéité pour appareillage électrique encastrable comprend une enveloppe en matière flexible adaptée pour contenir un bloc fonctionnel d'un appareillage électrique encastrable, l'enveloppe comprenant au moins une zone d'ouverture pour recevoir un moyen de retenue traversant du bloc fonctionnel.

Des caractéristiques ou des modes de réalisation particuliers, utilisables seuls ou en combinaison, sont :
- la zone d'ouverture est une ouverture ;
- la zone d'ouverture a une épaisseur E inférieure à l'épaisseur générale de l'enveloppe ;
- l'épaisseur E est suffisamment faible pour que le moyen de retenue déchire la zone d'ouverture en la traversant ;
- un mouvement de rotation du moyen de retenue engagé dans la zone d'ouverture entraine une déformation de l'enveloppe ;
- la chaussette comprend au moins un renfort formant une zone rigide autour de la zone d'ouverture ;
- le renfort est solidaire du moyen de retenue engagé de façon à suivre les mouvements du moyen de retenue ;
- une partie du moyen de retenue recouvre la zone d'ouverture ;
- la chaussette est réalisée en un matériau isolant électriquement et étanche ;
- l'épaisseur générale de l'enveloppe est déterminée pour assurer l'étanchéité de la chaussette à l'eau, l'air et à la poussière tout en assurant la moulabilité de l'enveloppe ;
- l'épaisseur générale de l'enveloppe est comprise entre 0,15 mm et 0,8 mm ;
- la chaussette comprend au moins une excroissance située dans un coin de la chaussette afin de fixer la chaussette au bloc fonctionnel.

Dans un second aspect de l'invention, un appareillage électrique encastrable dans une boite d'encastrement au moins par translation suivant un axe principal X comprend :
- une plaque frontale ;
- un bloc fonctionnel ; et
- une chaussette d'étanchéité selon un des modes de réalisation précédemment décrits.

### BREVE DESCRIPTION DES FIGURES

D'autres caractéristiques et avantages de l'invention ressortiront à la lecture de la description qui suit donnée uniquement à titre d'exemple et, en référence aux figures annexées qui illustrent :
- la figure 1, une chaussette d'étanchéité conforme à l'invention ;
- la figure 2, une vue de dessus de la chaussette d'étanchéité de la figure 1 ;
- la figure 3, une chaussette d'étanchéité conforme à l'invention et un bloc fonctionnel d'un appareillage électrique encastrable ;
- la figure 4A, une vue de côté d'une chaussette d'étanchéité conforme à l'invention et d'un bloc fonctionnel dont un moyen de retenue est engagé dans une zone d'ouverture avant déformation de la chaussette ;
- la figure 4B, une vue en perspective de dessous de la chaussette et du bloc fonctionnel de la figure 4A avant déformation de la chaussette ;
- la figure 4C, une vue de détail du moyen de retenue engagé dans la zone d'ouverture avant déformation de la chaussette ;
- la figure 5A, une chaussette d'étanchéité conforme à l'invention et un bloc fonctionnel, après déformation de la chaussette ;
- la figure 5B, une vue partielle à échelle agrandie de la chaussette de la figure 5A après déformation ; et
- la figure 6A, une vue en coupe partielle d'une chaussette d'étanchéité selon un second mode de réalisation de l'invention ;
- la figure 6B, une vue de détail en coupe de l'élément B de la figure 6A;
- la figure 6C, une vue en coupe d'un moyen de retenue avant engagement dans la zone d'ouverture selon le second mode de réalisation de l'invention ;
- la figure 7, un bloc fonctionnel fixé à une chaussette d'étanchéité ;
- la figure 8, une vue en perspective éclatée d'un appareillage électrique encastrable conforme à l'invention;
- la figure 9, une vue en perspective éclatée de l'appareillage électrique de la figure 7, un moyen de retenue du bloc fonctionnel étant engagé dans une zone d'ouverture de la chaussette ;
- la figure 10, un appareillage électrique encastrable conforme à l'invention.

Pour plus de clarté, les éléments identiques ou similaires sont repérés par des signes de référence identiques sur l'ensemble des figures.

### MODES DE REALISATION

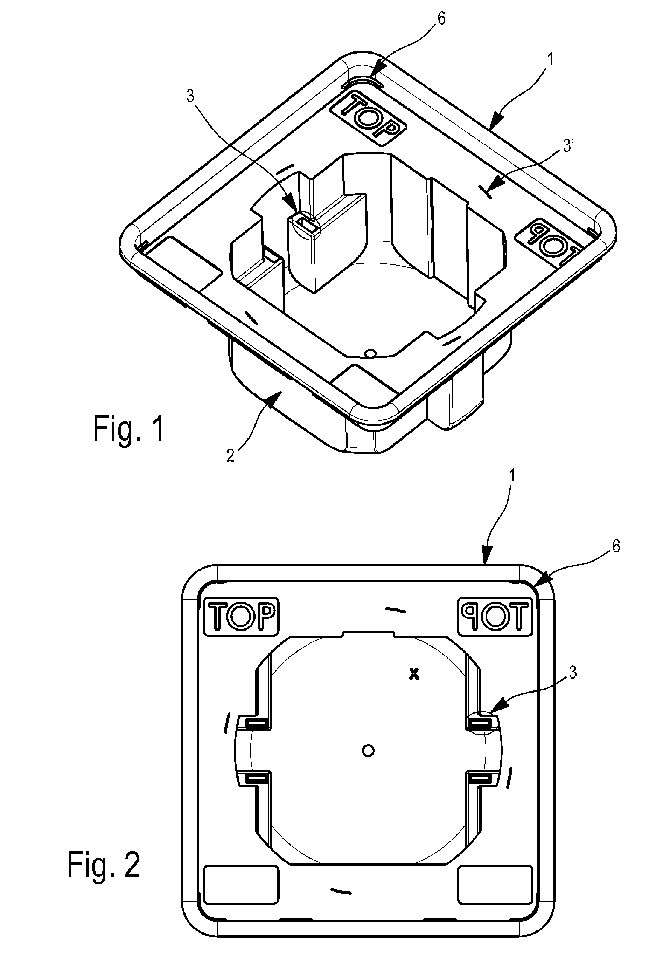

En référence aux figures 1 et 2, une chaussette 1 comprend une enveloppe 2 en matière flexible et une zone d'ouverture 3.

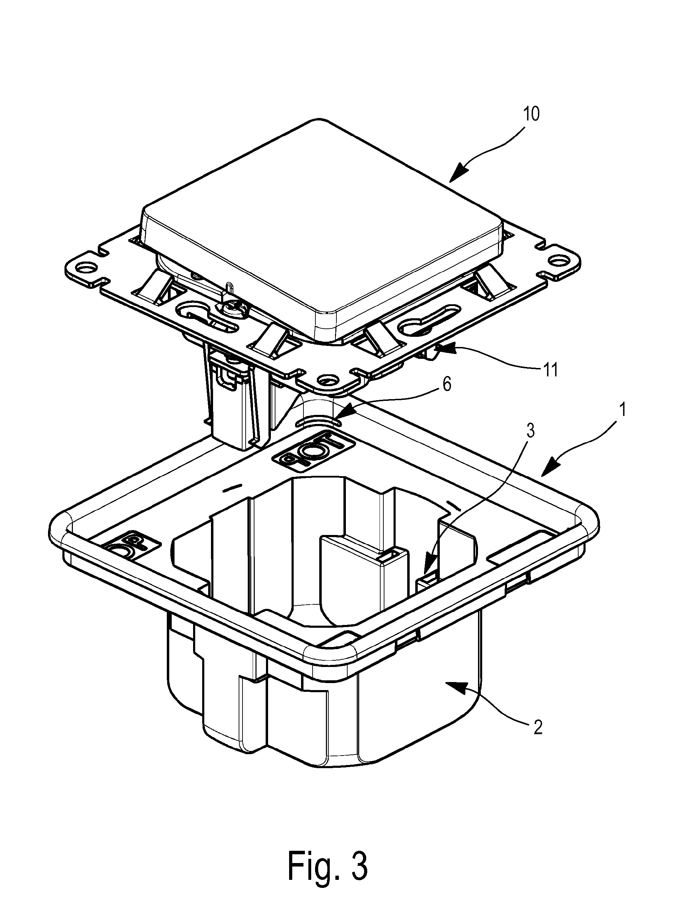

Tel qu'illustré à la figure 3, l'enveloppe 2 est adaptée à contenir un bloc fonctionnel 10 d'un appareillage électrique encastrable. La chaussette 1 entoure ainsi le bloc fonctionnel 10 de manière à le protéger d'un ruissellement d'eau, des poussières transportées par des courants d'air et des courants d'air qui peuvent entrainer des déperditions calorifiques.

Ce bloc fonctionnel 10 comprend au moins un moyen de retenue 11 qui est reçu dans la zone d'ouverture 3 en la traversant.

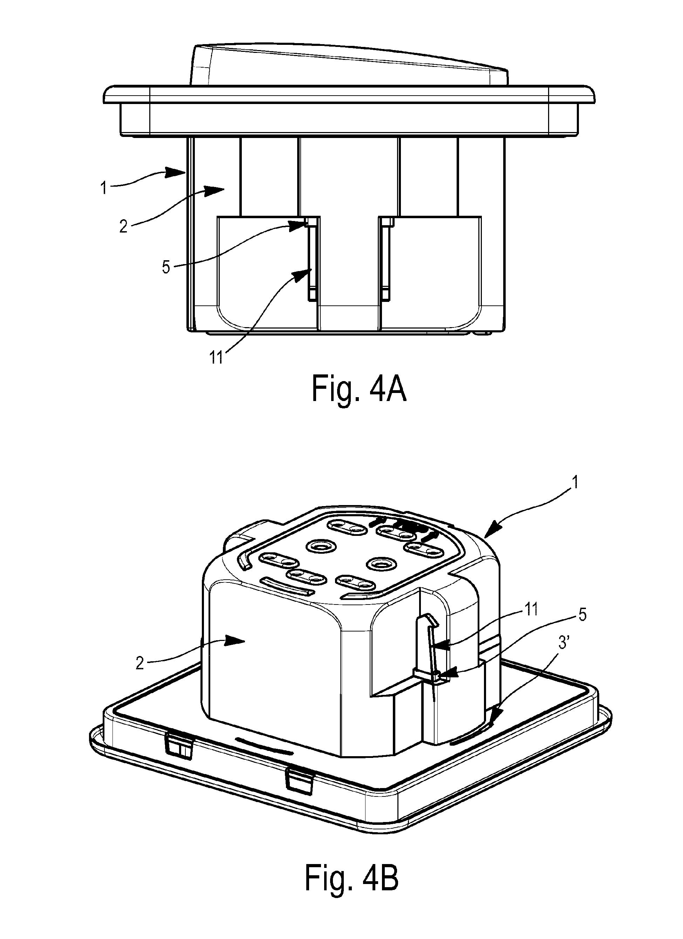

Selon un premier mode de réalisation, la zone d'ouverture 3 est une ouverture dans l'enveloppe 2. Le moyen de retenue 11 engagé dans l'ouverture traverse de part et d'autre l'enveloppe 2 de la chaussette d'étanchéité 1 (figure 4A).

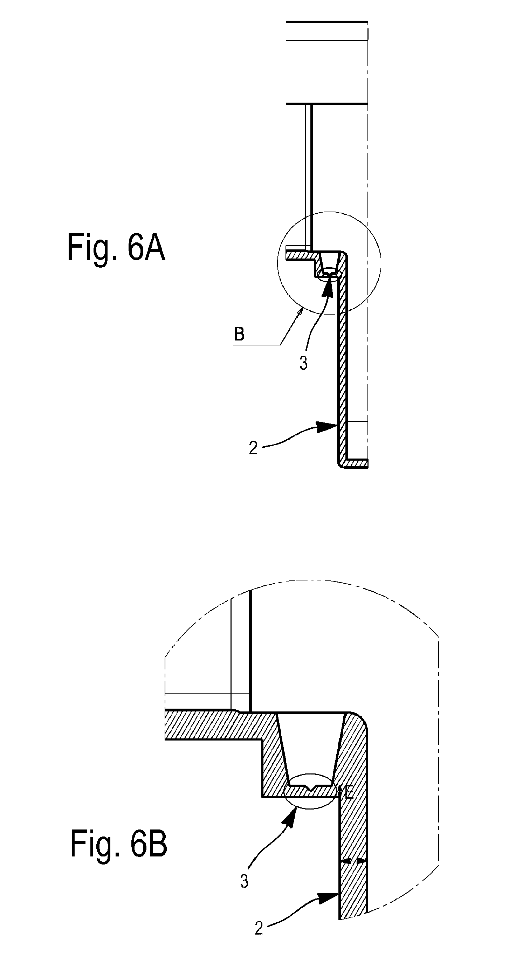

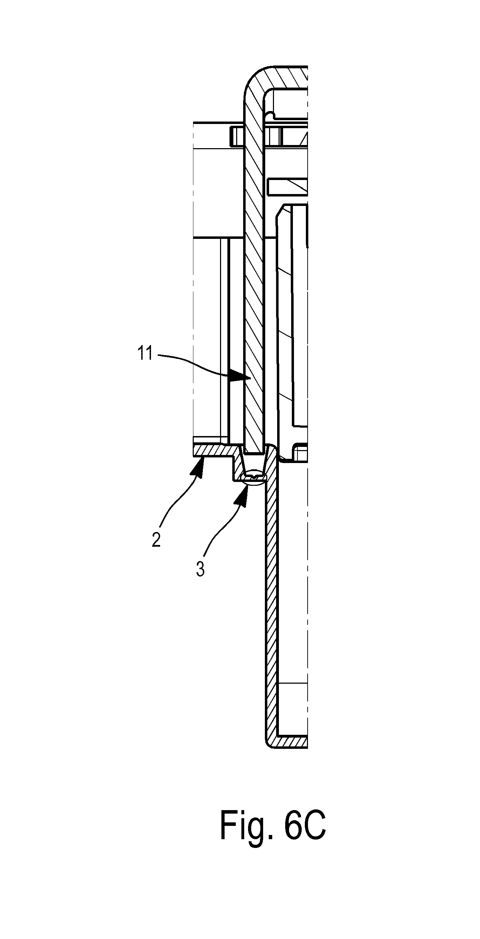

Selon un second mode de réalisation, illustré aux figures 6A, 6B et 6C, la zone d'ouverture 3 est une zone de l'enveloppe qui a une épaisseur E inférieure à l'épaisseur générale de l'enveloppe 2. L'épaisseur E est choisie pour permettre au moyen de retenue 11 du bloc fonctionnel 10 de déchirer la zone d'ouverture 3 lorsqu'il s'engage dans ladite zone. Le moyen de retenue 11 traverse ainsi de part et d'autre l'enveloppe 2 de la chaussette d'étanchéité 1 (figure 4A). La zone d'ouverture 3 peut être réalisée dans un matériau différent du matériau de l'enveloppe 2.

La zone d'ouverture, dans ce second mode de réalisation, est particulièrement difficile à réaliser, notamment en moulage, du fait de la précision nécessaire à sa réalisation. Il est avantageux d'utiliser une matière particulièrement fluide pour la réalisation de cette zone afin d'assurer le bon remplissage de la matière dans cette zone.

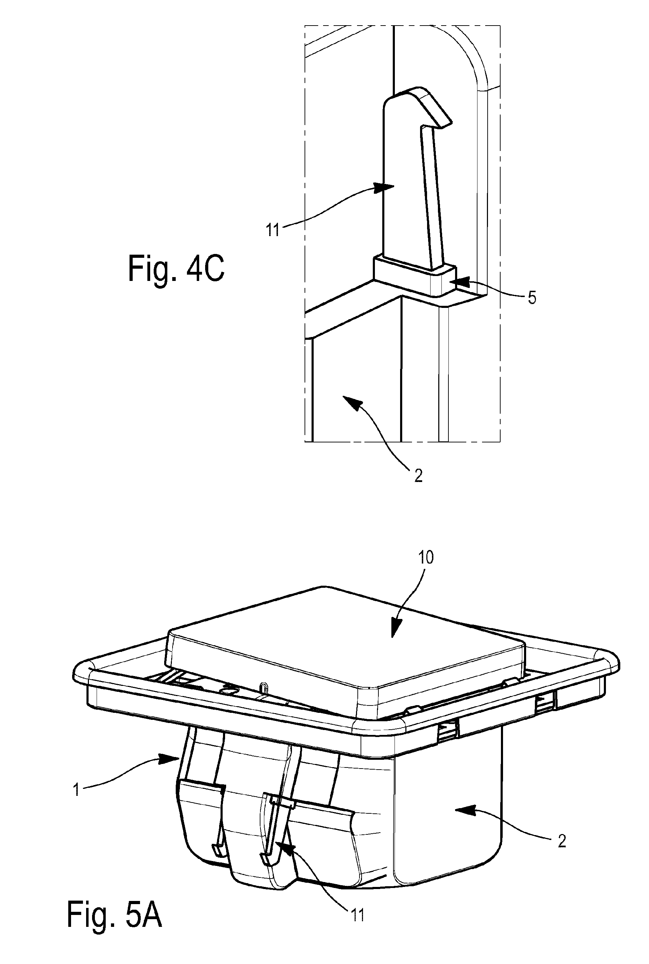

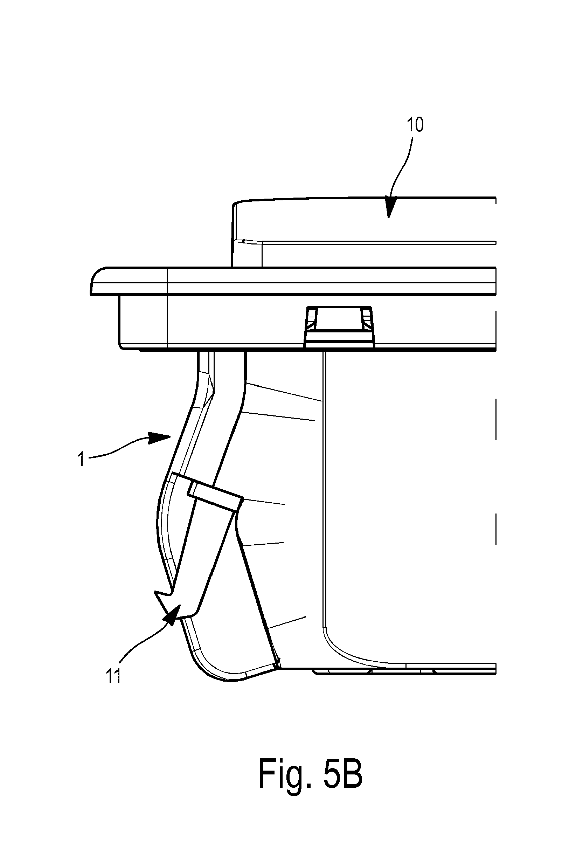

Une fois le moyen de retenue 11 engagé dans la zone d'ouverture 3 selon un des deux modes de réalisation précédemment décrits, un mouvement de rotation du moyen de retenue 11 entraine une déformation de l'enveloppe 2. Les figures 5A et 5B illustrent la chaussette 1 et l'enveloppe 2 ayant subi une déformation suite à un mouvement de rotation du moyen de retenue 11. Cette déformation a pour avantage d'assurer de façon optimale l'étanchéité du bloc fonctionnel 10 protégé par la chaussette 1, en maintenant la zone d'ouverture 3 au contact du moyen de retenue 11 sans générer d'espace vide entre la zone d'ouverture 3 et le moyen de retenue 11, la zone d'ouverture 3 épousant en permanence le moyen de retenue 11.

Tel qu'illustré aux figures 4A, 4B, 4C, 5A et 5B, la chaussette 1 peut comprendre un renfort 5 qui forme une zone rigide autour de la zone d'ouverture 3. Le renfort 5 a pour fonction d'assurer l'étanchéité de la chaussette autour de la zone d'ouverture 3 et du moyen de retenue 11 qui la traverse. De plus, le renfort 5 peut assurer un rôle de guidage du moyen de retenue 11 dans la zone d'ouverture 3 dans le second mode de réalisation, c'est-à-dire quand la zone d'ouverture est destinée à être déchirée par le moyen de retenue lors de son engagement dans la zone d'ouverture, ainsi qu'un rôle de limitation de création de microfissures, ou d'amorce de rupture de la matière, constituant la zone d'ouverture, au-delà d'une limite prédéfinie, lors du déchirement ou du déplacement du moyen de retenue 11 dans la zone d'ouverture 3.

Le renfort 5 est solidaire du moyen de retenue 11 engagé de façon à suivre les mouvements du moyen de retenue 11 . Ainsi, le moyen de retenue 11 en rotation prend appui sur le renfort 5 qui, de par sa rigidité et de par la flexibilité de l'enveloppe 2, oblige la déformation de la chaussette 1.

De façon non limitative, le moyen de retenue 11 du bloc fonctionnel 10 peut être un système à griffes tel que celui décrit dans la demande FR 1101465 de la Demanderesse. Le système à griffes qui y est décrit est adapté pour basculer entre une position escamotée et une position déployée. Ainsi, le bloc fonctionnel 10 peut comprendre un cadre, une vis engagée au travers d'une ouverture prévue dans le cadre, une griffe, tenant lieu de moyen de retenue 11, adaptée à basculer par rapport au cadre entre une position escamotée et une position déployée, et un écrou vissé sur la vis et agencé pour faire basculer la griffe depuis sa position escamotée vers sa position déployée.
Le cadre comporte une rampe et l'écrou est agencé pour glisser sur cette rampe lors du dévissage de la vis de sorte qu'il soit forcé à pivoter autour d'un axe afin de pousser la griffe depuis sa position déployée vers sa position escamotée. La griffe passe d'une position déployée à une position escamotée par un mouvement de rotation. Le passage entre ces deux positions est illustré en comparant la position du moyen de retenue 11 et du renfort 5 entre les figures 4 (A, B et C) et les figures 5 (A et B).

De préférence, le moyen de retenue du bloc fonctionnel destiné à être contenu dans la chaussette doit être en position escamotée afin d'assurer une insertion facile du moyen de retenue du bloc fonctionnel dans la zone d'ouverture.

Une partie du moyen de retenue peut recouvrir la zone d'ouverture. Ainsi, dans une alternative de réalisation, le moyen de retenue peut être une vis destinée à traverser une zone d'ouverture de l'enveloppe de la chaussette. Une telle alternative de zone d'ouverture est visible aux figures 1 et 4B et est référencée sur ces figures par l'élément 3'.Dans ce cas, la zone d'ouverture est une zone dont l'épaisseur E est inférieure à l'épaisseur générale de l'enveloppe. La vis en traversant cette zone d'ouverture déchire ladite zone d'ouverture 3'. Une partie de la vis recouvre la zone d'ouverture 3' assurant l'étanchéité de la chaussette 1 au niveau de la zone d'ouverture déchirée par la vis.

De préférence, la chaussette 1 est réalisée en un matériau isolant électriquement et étanche, par exemple du styrène-éthylène/butadiène-styrène (SEBS).

De préférence, l'épaisseur générale de l'enveloppe doit être suffisante pour assurer une étanchéité optimale à l'eau, l'air et à la poussière mais cette épaisseur doit aussi tenir compte des contraintes de moulabilité lors de la réalisation industrielle d'une telle chaussette. L'épaisseur générale de l'enveloppe peut être comprise entre 0,15 et 0,8 mm. De façon particulièrement avantageuse, l'épaisseur générale de l'enveloppe peut être de 0,4 mm ou 0,5 mm afin de satisfaire aux contraintes d'étanchéité à l'eau, à l'air et à la poussière tout en assurant une réalisation aisée de la chaussette.

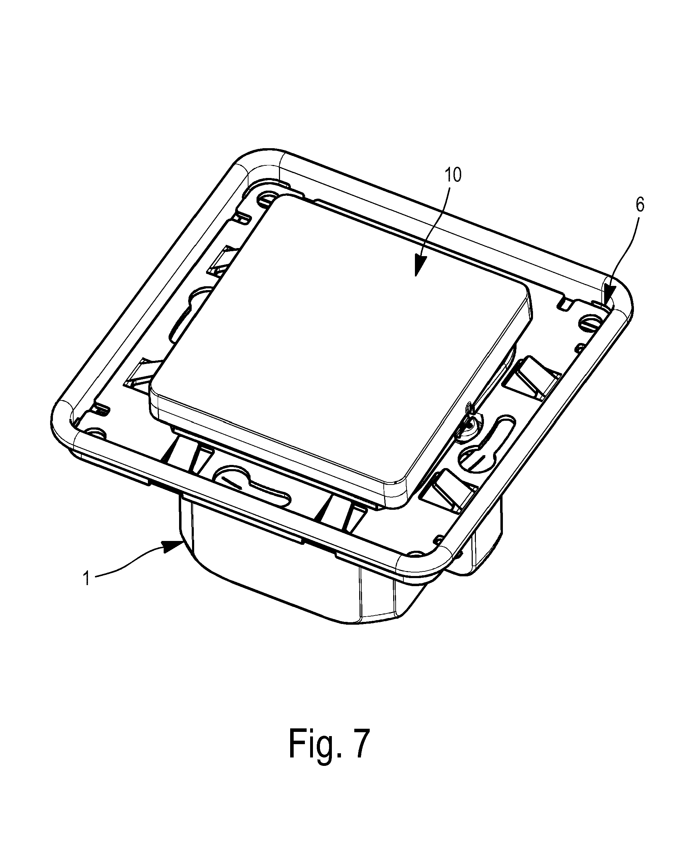

La figure 7 illustre un bloc fonctionnel 10 fixé sur une chaussette d'étanchéité 1. La chaussette 1 est fixée au bloc fonctionnel 10 au moyen d'au moins une excroissance 6 disposée dans un coin de la chaussette 1 (l'excroissance 6 est aussi visible, par exemple, sur les figures 1, 2 et 3).

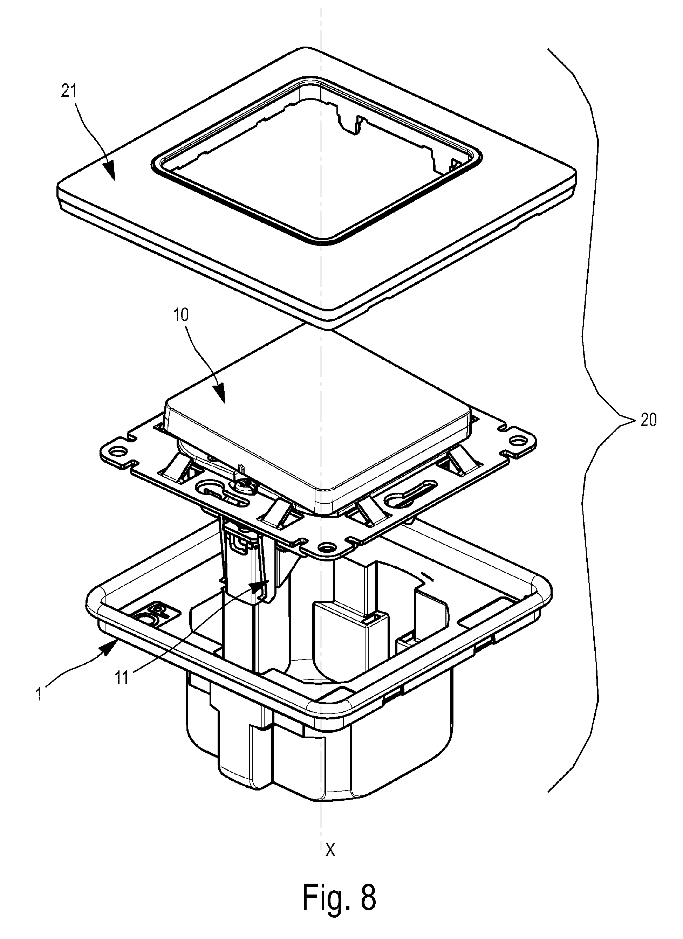

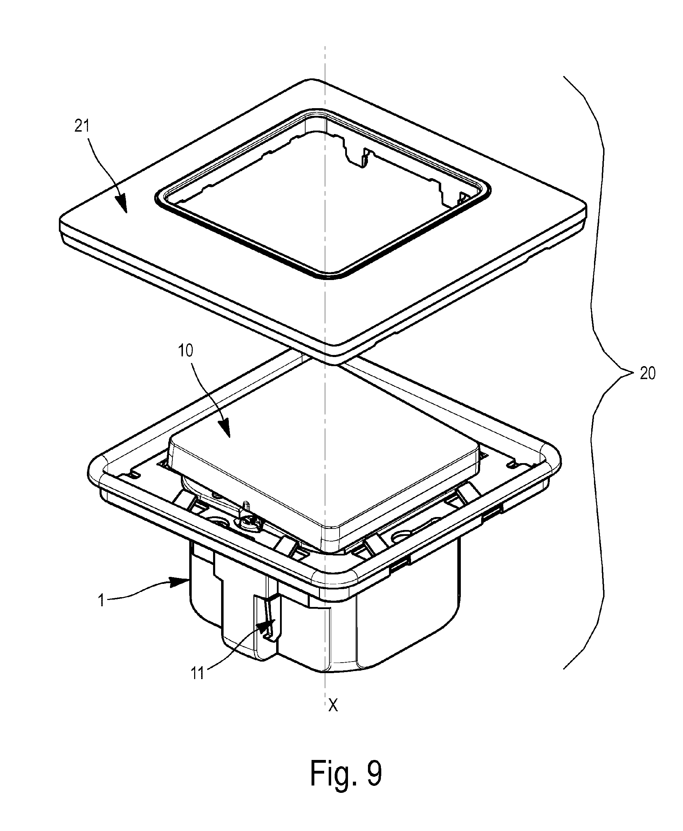

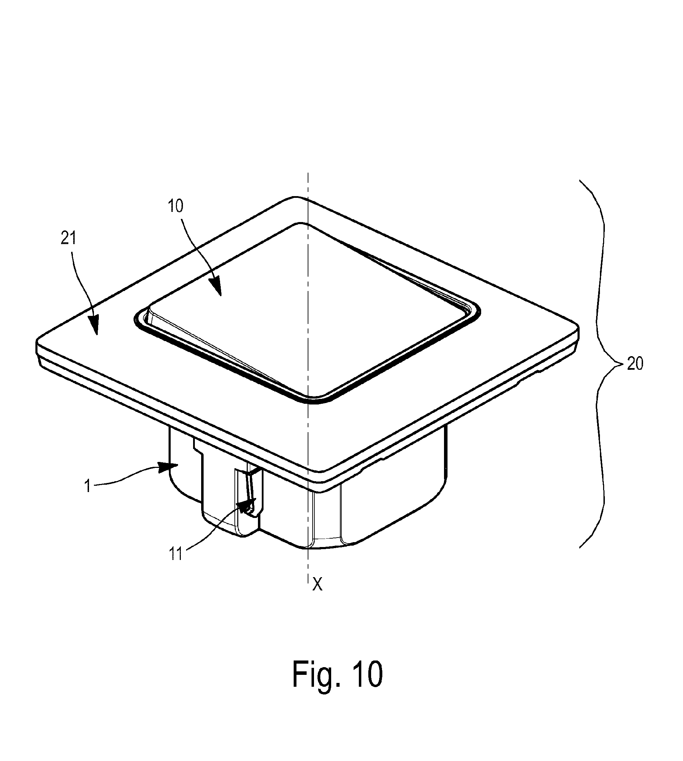

En référence aux figures 8, 9 et 10, l'invention concerne également un appareillage électrique encastrable 20 dans une boite d'encastrement par translation suivant un axe principal X.

Cet appareillage comprend une plaque frontale 21, un bloc fonctionnel 10 et une chaussette d'étanchéité 1 selon un des modes de réalisation précédemment décrits. Le bloc fonctionnel 10 est destiné à être inséré dans la chaussette d'étanchéité 1. Le moyen de retenue 11 du bloc fonctionnel traverse la zone d'ouverture 3 de la chaussette. La plaque frontale 21 peut être encliquetée sur le bloc fonctionnel 10.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles.

Dans les revendications, le mot « comprenant » n'exclut pas d'autres éléments et l'article indéfini « un/une » n'exclut pas une pluralité.

## Revendications

1. Chaussette d'étanchéité (1) pour appareillage électrique encastrable comprenant une enveloppe (2) en matière flexible adaptée pour contenir un bloc fonctionnel (10) d'un appareillage électrique encastrable **caractérisé en ce qu'**elle comprend au moins une zone d'ouverture (3) pour recevoir un moyen de retenue (11) traversant du bloc fonctionnel (10), la zone d'ouverture (3) de l'enveloppe (2)étant adaptée pour se solidariser avec le moyen de retenue (11) de sorte qu'un mouvement de rotation du moyen de retenue (11) engagé dans la zone d'ouverture (3) entraine une déformation de l'enveloppe (2).

2. Chaussette d'étanchéité (1) pour appareillage électrique encastrable selon la revendication 1 **caractérisé en ce que** la zone d'ouverture (3) est une ouverture.

3. Chaussette d'étanchéité (1) pour appareillage électrique encastrable selon la revendication 1 **caractérisé en ce que** la zone d'ouverture (3) a une épaisseur E inférieure à l'épaisseur générale de l'enveloppe (2).

4. Chaussette d'étanchéité (1) pour appareillage électrique encastrable selon la revendication 3 **caractérisé en ce que** l'épaisseur E est suffisamment faible pour que le moyen de retenue (11) déchire la zone d'ouverture (3) en la traversant.

5. Chaussette d'étanchéité (1) pour appareillage électrique encastrable selon l'une quelconque des revendications précédentes **caractérisé en ce qu'**elle comprend au moins un renfort (5) formant une zone rigide autour de la zone d'ouverture (3).

6. Chaussette d'étanchéité (1) pour appareillage électrique encastrable selon la revendication 5 **caractérisé en ce que** le renfort (5) est solidaire du moyen de retenue (11) engagé de façon à suivre les mouvements du moyen de retenue (11).

7. Chaussette d'étanchéité (1) pour appareillage électrique encastrable selon la revendication 4 **caractérisée en ce qu'**une partie du moyen de retenue (11) recouvre la zone d'ouverture (3).

8. Chaussette d'étanchéité (1) pour appareillage électrique encastrable selon l'une quelconque des revendications précédentes **caractérisé en ce que** la chaussette est réalisée en un matériau isolant électriquement et étanche.

9. Chaussette d'étanchéité (1) pour appareillage électrique encastrable selon l'une quelconque des revendications précédentes **caractérisé en ce que** l'épaisseur générale de l'enveloppe (2) est comprise entre 0,15 mm et 0,8 mm.

10. Chaussette d'étanchéité (1) pour appareillage électrique encastrable selon l'une quelconque des revendications précédentes **caractérisé en ce qu'**elle comprend au moins une excroissance (6) située dans un coin de la chaussette afin de fixer la chaussette au bloc fonctionnel (10).

11. Appareillage électrique encastrable (20) dans une boite d'encastrement au moins par translation suivant un axe principal X, cet appareillage comprenant :
- une plaque frontale (21);
- un bloc fonctionnel (10); et
- une chaussette d'étanchéité (1) selon l'une des revendications précédentes.
